**Europäisches Patentamt**

**European Patent Office**

**Office européen des brevets**

(19)

(11) Veröffentlichungsnummer: **0 044 479**

**A1**

(12) # EUROPÄISCHE PATENTANMELDUNG

(21) Anmeldenummer: **81105371.9**

(22) Anmeldetag: **10.07.81**

(51) Int. Cl.³: **B 23 Q 11/08**

(30) Priorität: **18.07.80 LU 82640**

(43) Veröffentlichungstag der Anmeldung:
**27.01.82 Patentblatt 82/4**

(84) Benannte Vertragsstaaten:
**AT BE CH DE FR GB IT LI NL SE**

(71) Anmelder: **Kupfer, Karlheinz**
**Im Valtert 2**
**D-6951 Obrigheim(DE)**

(72) Erfinder: **Kupfer, Karlheinz**
**Im Valtert 2**
**D-6951 Obrigheim(DE)**

(74) Vertreter: **Hach, Hans Karl, Dr.**
**Tarunstrasse 23**
**D-6950 Mosbach-Waldstadt(DE)**

(54) **Vorrichtung zum Zerkleinern von Werkstücken.**

(57) Für eine motorbetriebene Trenneinrichtung (30) ist eine untergestellte, mit Wasser füllbare Wanne (1) zum Auffangen des unter Umständen verseuchten Schleifstaubes vorgesehen.

EP 0 044 479 A1

## VORRICHTUNG ZUM ZERKLEINERN VON WERKSTÜCKEN

Die Erfindung betrifft eine Vorrichtung zum Zerkleinern von Werkstücken durch Trennen mit Hilfe einer umlaufend angetriebenen Trennscheibe, die mit einer mit Nachführvorrichtung ausgestatteten Trageinrichtung für eine motorbetriebene Trennvorrichtung mit einer mit Einspannvorrichtung versehenen Aufnahme für das Werkstück und einer Kühleinrichtung, durch die ein Kühlflüssigkeitsstrahl auf die Arbeitsstelle gerichtet wird, und mit einer Wanne zum Auffangen der abtropfenden Kühlflüssigkeit ausgestattet ist.

Bei Vorrichtungen dieser Art kann der Trennvorgang durch Sägen, Schleifen oder Schneiden erfolgen, jeweils mit einem schnellbewegten Werkzeug, zum Beispiel einer umlaufenden Trennscheibe oder Kreissäge. Bei Betrieb wird der beim Trennen anfallende Abrieb zusammen mit Kühlwasser in die Umgebung verspritzt. Aus diesem Grunde sind bekannte Vorrichtungen dieser Art nicht geeignet für Anwendungsfälle, bei denen die unkontrollierte Verteilung von Abrieb und Flüssigkeit an die Umgebung vermieden werden muß, wie es zum Beispiel beim Zertrennen von radioaktiv verseuchten oder möglicherweise radioaktiv versuchten Werkstücken der Fall ist.

Aufgabe der Erfindung ist es, eine solche Belastung der Umgebung mit herumspritzenden Materialien und Flüssigkeit zu vermeiden.

Die Erfindung ist dadurch gekennzeichnet, daß die Wanne sich über den gesamten Grundriß der Vorrichtung erstreckt und daß die Trageinrichtung und die Aufnahme innerhalb eines nach unten und allen Seiten spritzwasserdichten Schutzkäfigs angeordnet ist, der aus der Wanne und nach oben als Verlängerung der Wannenwände an diese anschließend an- und absetzbaren Schutzwänden gebildet wird.

Nach der Erfindung wird das eventuell herumspritzende Material durch den Schutzkäfig aufgefangen. Wenn man den Schutzkäfig aus strahlenabsorbierendem Material ausgestaltet, dann kann er gleichzeitig als Strahlenschutz für die umhergehenden Bedienungspersonen vor den vom Werkstück ausgehenden Strahlen dienen. Die Ausgestaltung des oberen Teils der Wände des Schutzkäfigs abnehmbar und wiedereinsetzbar trägt den engen Raumverhältnissen in den Sicherheitszonen von strahlenbelasteten Einrichtungen, wie zum Beispiel Kernkraftwerken, Rechnung. Wenn in der Sicherheitszone eines Kernkraftwerkes dort vorhandene mechanische Einrichtungen, zum Beispiel Rohrleitungen, Metallbehälter, Metallarmaturen und dergleichen, unbrauchbar werden und abgebaut werden, dann müssen sie anschließend verwahrt werden. Dazu müssen sie in Spezialbehältern ökonomisch möglichst eng verpackt werden , ehe sie aus dem Sicherheitsbereich herausgetragen werden können. Um sie möglichst eng zu verpacken, müssen sie unter Umständen zersägt beziehungsweise zerschnitten werden. Wenn das innerhalb der Sicherheitszone geschehen soll, dann muß die dafür vorgesehene Einrichtung den bedrängten Raumverhältnissen der Sicherheitszone Rechnung tragen und das ermöglicht die Erfindung.

Weiterbildungen der Erfindung sind Gegenstand der Unteransprüche.

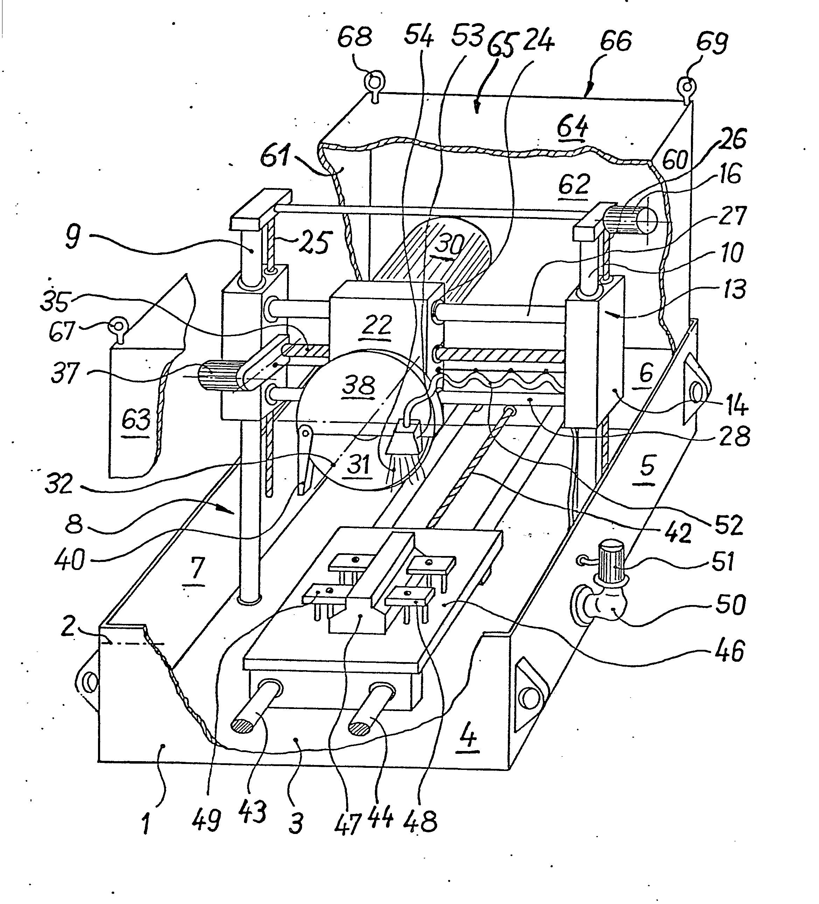

Die Erfindung wird nun anhand der beigefügten Zeichnung, in der ein Ausführungsbeispiel aufgebrochen perspektivisch dargestellt ist, näher erläutert.

In der Zeichnung ist mit 1 eine nach oben offene Wanne bezeichnet, die bis zu dem durch die strichpunktierte Linie 2 angedeuteten Spiegel mit Kühlflüssigkeit - im allgemeinen Kühlwasser - gefüllt ist. Der Boden 3 der Wanne ist eine rechteckige Platte und die vier Seitenwände 4 bis 7 stehen vertikal. Innerhalb der Wanne 1 ist ein Montagegestell 8 angeordnet, das zwei vertikale Ständer 9 und 10 aufweist, die an den gegenüberliegenden Wannenwänden 5, 7, einwärts von diesen, angeordnet sind. Diese Ständer 9, 10 tragen eine horizontal sich erstreckende Tragbrücke 13. Die Tragbrücke ist entlang der Ständer 9, 10 nach Art eines Schlittens höhenverstellbar. Zur Verstellung dienen zwei Gewindespindeln 25, 26, die von dem Motor 16 antreibbar sind.

Auf der Tragbrücke 13 ist eine Flanscheinrichtung 22 nach Art eines Schlittens auf zwei Querstangen 27, 28 geführt. Die Flanscheinrichtung 22 ist entlang der Stangen mit Hilfe einer durch den Antriebsmotor 37 drehbaren Gewindespindel 35 verschieblich. Die Flanscheinrichtung 22 trägt die motorbetriebene Trenneinrichtung 30, die eine Trennscheibe 31, rotierend um eine horizontale Achse 32, antreibt.

Die Trennscheibe 31 ist nach oben durch eine Schutzhaube 38 abgeschirmt und nach beiden Seiten in Verlängerung des Schnittes, oder wie im Ausführungsbeispiel nach einer Seite in der Bahn des abgesprühten Schleifstaubes durch einen herunterhängenden Gummilappen 40 abgeschirmt. Der Gummilappen 40 leitet den absprühenden Schleifstaub nach unten in die Wasserfüllung der Wanne 1 ab.

Unterhalb der Tragbrücke 13 ist eine aus mehreren horizontal und parallel angeordneten Stangen 43, 44 bestehende Plattform gebildet, die oberhalb des Wasserspiegels 2 liegt und Schlittenführung für die als Schlitten ausgebildete Unterlage 46 ist. Die Unterlage 46 ist entlang der Stangen 43, 44 durch eine motorbetriebene Gewindespindel 42 hin- und herbeweglich. Auf diese Unterlage wird das zu zertrennende, in der Zeichnung abgebrochen dargestellte Werkstück 47 gelegt und mittels an der Unterlage 46 befestigter Einspannvorrichtungen 48, 49 festgelegt.

Vom unteren Ende der Wanne 1 geht ein Abflußstutzen 50 aus, der zur Sogseite einer motorbetriebenen Pumpe 51 führt, die außerhalb der Wanne 1 angeordnet ist und deren Druckseite an eine Kühlflüssigkeitsleitung 52 angeschlossen ist, die im Arbeitsbereich der Trennscheibe 31 mündet und es gestattet, bei Betrieb einen Flüssigkeitsstrahl 54 von Kühlflüssigkeit aus einer vorgesehenen Düse 53 auf den Arbeitsbereich zu richten. Die Kühlflüssigkeit tropft dort wieder ab, wird in der Wanne aufgefangen und erneut versprüht.

Sämtliche Antriebsmotoren, nämlich die Antriebsmotoren 16 und 37, der Antriebsmotor für die Gewindespindel 42 und der Antriebsmotor für die Pumpe 51 sowie der Antriebsmotor für die Trenneinrichtung 30, sind vorzugsweise hydraulisch oder elektrisch betriebene Motoren und über eine nicht dargestellte Einrichtung fernbedienbar, vorzugsweise aus einer Entfernung von etwa 5 bis 10 m (Meter).

Die Anordnung wird betriebsbereit gemacht soweit bis jetzt beschrieben. Das Werkstück wird in die Einspannvorrichtung 48, 49 eingespannt und durch Verschieben der Unterlage 46 in eine dem angestrebten Schnitt entsprechende Position unter der Trennscheibe gebracht. Die Trennscheibe 31 wird angesetzt durch entsprechende Höhenverstellung der Tragbrücke 13 und seitliche Verstellung der Flanscheinrichtung 22. Bevor der Antriebsmotor für die Trennscheibe 31 eingeschaltet wird, wird auf die Seitenwände 4, 5, 6, 7 der Wanne 1 eine Haube 65 gesetzt, deren seitliche Schutzwände 60, 61, 62, 63 die Seitenwände der Wanne nach oben verlängern. Der Deckel der Haube ist mit 64 bezeichnet.

Diese Haube 65 bildet mit der Wanne 1 einen Schutzkäfig 66, der nach allen Seiten und nach unten und oben spritzwasserdicht geschlossen ist und die gesamte Vorrichtung einschließlich des Montagegestells 8 aufnimmt. Die Haube 65 weist ebenso wie die Wanne 1 Tragösen 67 bis 69 auf, durch die diese Teile mit Kranhaken erfaßt werden können. Die Haube kann aus einem Stück bestehen, sie kann aber auch aus den Schutzwänden 60 bis 63 und dem Deckel 64 zusammengesetzt sein. In diesem Fall werden die Schutzwände und der Deckel entlang ihrer aneinandergrenzenden Kanten miteinander verriegelt und abgedichtet durch nicht dargestellte Verriegelungs- und Abdichtelemente.[1]

Alle Wände der Wanne 1 und der Haube 65 einschließlich des Bodens der Wanne und des Deckels 64 der Haube sind vorzugsweise aus radioaktive Strahlung abschirmendem Material, wie beispielsweise Stahlblech, hergestellt.

Bei geschlossenem Schutzkäfig 66 können die Trenneinrichtung 30 und die zum Verstellen dienenden Motoren durch Fernbedienung geschaltet werden. Die Fernbedienung kann drahtlos erfolgen. Sie kann aber auch über nicht dargestellte Leitungen erfolgen, die ebenso, wie die nicht dargestellten Stromversorgungsleitungen am Montagegestell verlegt und an der Rückseite aus der Wanne herausgeführt sind. Die Trenneinrichtung 30 kann dann für den erforderlichen Trennschnitt hin und her und nach unten nachgeführt werden, bis der gewünschte Trennschnitt vollzogen ist. Ist das geschehen, dann kann ein neuer Trennschnitt geschnitten werden. Dazu wird bei zurückgezogener Trennscheibe die Unterlage 46 entsprechend verstellt.

Beim Schneiden ist auch die Kühlwasserzufuhr in Betrieb gesetzt, so daß der Arbeitsbereich ständig gekühlt wird und der dort anfallende Sägestaub durch das Kühlwasser aufgefangen und nach unten in die Wanne mitgenommen wird. Eventuell verspritzendes Kühlwasser wird durch den Gummilappen 40 aufgefangen und nach unten abgeleitet, so daß allenfalls nur ganz geringe Nebelanteile in die Umgebung geraten können, die dann aber innen an den Wänden des Schutzkäfigs aufgefangen werden und sämtlichst in die Wanne 1 gelangen, und die äußere Umgebung geschützt ist vor verseuchtem Staub oder verseuchten Flüssigkeitsteilchen und auch vor direkter Strahlung.

P 41 516
0044479

Sobald alle Trennschnitte vollzogen sind, wird das Werkstück ausgewechselt und die Trenneinrichtung 30 neu eingerichtet. Für diese Zugriffe wird die Einrichtung zugänglich gemacht, indem man eine oder mehrere der Schutzwände oder die Haube entfernt. Wesentlich ist, daß die Bedienungsperson bei diesen Zugriffen nur kurzzeitig sich in die Nähe des eventuell strahlungsverseuchten Werkstückes begeben muß, und das auch nur während die Trenneinrichtung nicht in Betrieb ist, also kein Staub anfällt.

Patentansprüche:

1. Vorrichtung zum Zerkleinern von Werkstücken durch Trennen mit Hilfe einer umlaufend angetriebenen Trennscheibe, die mit einer mit Nachführvorrichtung ausgestatteten Trageinrichtung für eine motorbetriebene Trennvorrichtung mit einer mit Einspannvorrichtungen versehenen Aufnahme für das Werkstück und einer Kühleinrichtung, durch die ein Kühlflüssigkeitsstrahl auf die Arbeitsstelle gerichtet wird, und mit einer Wanne zum Auffangen der abtropfenden Kühlflüssigkeit ausgestattet ist, dadurch gekennzeichnet, daß die Wanne ( 1 ) sich über den gesamten Grundriß der Vorrichtung erstreckt, und daß die Trageinrichtung ( 13 ) und die Aufnahme ( 22 ) innerhalb eines nach unten und allen Seiten spritzwasserdichten Schutzkäfigs ( 66 ) angeordnet ist, der aus der Wanne ( 1 ) und nach oben als Verlängerungen der Wannenwände ( 4 bis 7 ) an diese anschliessend an- und absetzbaren Schutzwänden ( 60 bis 63 ) gebildet wird.

2. Vorrichtung nach Anspruch 1, dadurch gekennzeichnet, daß die Wände ( 4 - 7 und 60 - 63 ) des Schutzkäfigs ( 66 ) sich entlang der Seiten eines Quaders erstrecken.

3. Vorrichtung nach Anspruch 1 oder 2, gekennzeichnet durch ein innerhalb des Schutzkäfigs ( 66 ) angeordnetes Montagegestell ( 8 ) mit zwei vertikalen Ständern ( 9, 10 ), die gegenüberliegend der Wandungen ( 5, 7 ) des Schutzkäfigs ( 66 ) angeordnet sind und eine entlang der Ständer ( 9, 10 ) verschiebliche Tragbrücke ( 13 ) tragen, an der entlang einer Horizontalführung ( 27, 28 ) eine Flanscheinrichtung ( 22 ) für die Trennvorrichtung ( 30 ) horizontal verschieblich gelagert ist.

4. Vorrichtung nach einem der vorhergehenden Ansprüche, gekennzeichnet durch einen mit Fernsteuerung ausgestatteten Verstellantrieb ( 16, 37 ) für die Vertikalführung ( 10, 14 ) und/oder die Horizontalführung ( 27, 36 ).

5. Vorrichtung nach einem der vorhergehenden Ansprüche, gekennzeichnet durch eine aus Stangen ( 43, 44 ) gebildete horizontale Tragbühne ( 46 ), die oberhalb des Kühlwasserspiegels ( 2 ) innerhalb der Wanne ( 1 ) befestigt ist und eine als Aufnahme für das Werkstück ( 47 ) dienende, mit Einspannvorrichtung ( 48, 49 ) ausgestattete Unterlage ( 46 ) trägt.

6. Vorrichtung nach Anspruch 5, dadurch gekennzeichnet, daß die Tragbühne ( 46 ) als Schlitten ausgebildet ist, der auf den Stangen ( 43, 44 ) mittels einer motorbetriebenen Gewindespindel ( 42 ) verschieblich ist.

7. Vorrichtung nach einem der vorhergehenden Ansprüche, dadurch gekennzeichnet, daß eine Abflußleitung ( 50 ) unten von der Wanne ( 1 ) ausgeht, die an die Saugseite einer außerhalb der Wanne angeordneten Pumpe ( 51 ) führt, deren Druckseite an eine auf die Arbeitsstelle gerichtete Kühlflüssigkeitsleitung ( 52 ) angeschlossen ist.

8. Vorrichtung nach einem der vorhergehenden Ansprüche, gekennzeichnet durch einen an einer Schutzhaube ( 38 ) für die Trennscheibe ( 31 ) hängenden Schutzlappen ( 40 ) in der Bahn des abgesprühten Schleifstaubes.

0044479

| Europäisches Patentamt | **EUROPÄISCHER RECHERCHENBERICHT** |

| **EINSCHLÄGIGE DOKUMENTE** | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | B 23 Q 11/08 |
| | US - A - 2 502 792 (KEMPER) <br><br> * Spalte 2, Zeile 26 bis Spalte 3, Zeile 15; Figur 1 * <br><br> --- | 1 | |
| | CH - A - 512 696 (MEYER) | 1 | |
| | FR - A - 2 340 802 (ASTEC) | 1 | |
| | DE - A - 1 929 990 (CARBORUNDUM) <br><br> * Seite 10, Zeile 8 bis Seite 12, Zeile 26; Figuren * <br><br> --- | 1 | RECHERCHIERTE SACHGEBIETE (Int. Cl³) |
| | US - A - 3 702 740 (PETTIGREW) <br><br> * Spalte 5, Zeile 32 bis Spalte 6, Zeile 15; Figuren * <br><br> --- | 1 | B 23 D 59/00 <br> B 23 Q 11/00 <br> B 24 B 27/00 <br> G 21 C 19/00 <br> G 21 F 7/00 |
| A | US - A - 2 855 728 (LINDH) | 1 | |
| A | DE - A - 2 731 252 (HOOHEI) | 1 | |
| A | US - A - 2 322 129 (HAWKINS) | 1 | |
| A | DE - A - 1 652 083 (KLINGENBERG) | 1 | KATEGORIE DER GENANNTEN DOKUMENTE |
| A | DE - B - 1 079 229 (COMMISSARIAT) <br><br> -------- | 1 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 28.10.1981 | HORVATH |

EPA form 1503.1  06.78